Europäisches Patentamt

European Patent Office

Office européen des brevets

(11) Publication number: 0 370 786 A2

## EUROPEAN PATENT APPLICATION

(21) Application number: 89312113.7

(22) Date of filing: 22.11.89

(51) Int. Cl.5: C09J 151/06, C08J 5/12, C08L 51/06, //(C09J151/06, 123:16),(C08L51/06,23:08)

(30) Priority: 22.11.88 JP 293465/88

(43) Date of publication of application:
30.05.90 Bulletin 90/22

(84) Designated Contracting States:
BE DE FR GB NL

(71) Applicant: MITSUI TOATSU CHEMICALS INC.
No. 2-5, Kasumigaseki 3-chome
Chiyoda-Ku Tokyo 100(JP)

(72) Inventor: Abe, Masaru
2-14, Ayazono
Takaishi-shi Osaka(JP)
Inventor: Kawai, Yoichi
1541, Yabe-cho Totsuka-ku
Yokohama-shi Kanagawa(JP)
Inventor: Miyazaki, Takashi
7-14-8, Minamikoiwa Edogawa-ku
Tokyo(JP)

(74) Representative: Hutchins, Michael Richard et al
Graham Watt & Co. London Road Riverhead
Sevenoaks, Kent TN13 2BN(GB)

(54) Polypropylene resin composition.

(57) The present invention relates to a polypropylene resin composition useful as an adhesive comprising (A) from about 55 wt. % to about 99 wt. % of a modified polypropylene resin graft-modified with a radical polymerizable polar unsaturated compound or a mixture of the same with an unmodified polypropylene resin, and (B) from about 1 to about 45 wt. % of an ethylene/propylene copolymer rubber having an ethylene content of from about wt. % to about 45 wt. %.t. The resin composition is particularly suitable for bonding a polypropylene resin layer and an ethylene/vinyl alcohol copolymer layer and for bonding a polypropylene resin layer and a polyamide resin layer.

EP 0 370 786 A2

## POLYPROPYLENE RESIN COMPOSITION

## BACKGROUND OF THE INVENTION

### Field of the Invention

The present invention relates to a polypropylene resin composition useful as an adhesive, and more particularly, to a polypropylene resin composition useful as an adhesive for bonding a polypropylene resin layer and an ethylene/vinyl alcohol copolymer (hereinafter referred to as EVOH) layer or a polyamide resin layer.

### Description of the Related Art

Laminates comprising a polypropylene resin layer and an EVOH layer, or a polypropylene resin layer and a polyamide resin layer, are low in oxygen permeability and moisture vapor permeability and are widely used for containers for foods and medicines.

However, since adhesion between a polypropylene resin layer and an EVOH layer or a polyamide resin layer is poor, a molding method is generally employed wherein a bonding layer is placed between the resin layers by coextrusion, to laminate the layers.

It is well known that polyolefin resins graft-modified with an unsaturated carboxylic acid or derivatives thereof may be used as a bonding layer (see for example Japanese Patent Application Laid-open Nos. 5527/1973, 98784/1976, and 26548/1977). It is also known that the bonding strength between the resin layers may be improved by adding a low-density polyethylene to the graft-modified polyolefin resin (see for example Japanese Patent Publication No. 40113/1979), adding a high-density polyethylene to the graft-modified polyolefin resin (see for example Japanese Patent Publication No. 36586/1984), or adding a hydrocarbon elastomer to the graft-modified polyolefin resin (see for example Japanese Patent Publication No. 40112/1979).

When compositions prepared by adding a low-density polyethylene, an ethylene polymer, or a hydrocarbon elastomer to a graft-modified polyolefin resin are employed as an adhesive layer, the bonding strength may be improved. However, when the loss part trimmed from the laminate product is recycled for reuse, the appearance of the resulting laminate product becomes poor, and therefore further improvement is sought.

## SUMMARY OF THE INVENTION

The present invention overcomes the problems and disadvantages of the prior art by providing a composition prepared by blending an ethylene/propylene copolymer rubber with a modified polypropylene resin graft-modified with a radical polymerizable polar unsaturated compound or a mixture of the modified polypropylene resin graft-modified with a radical polymerizable polar unsaturated compound with an unmodified polypropylene resin.

It is an object of the invention to provide a polypropylene resin composition that is useful as an adhesive for bonding a polypropylene resin layer and an EVOH layer or a polyamide resin layer.

It is a further object of the invention to provide a polypropylene resin composition that has good bonding strength and good appearance.

Additional objects and advantages of the invention will be set forth in part in the description which follows, and in part will be obvious from the description, or may be learned by practice of the invention. The objects and advantages of the invention will be realized and attained by means of the instrumentalities and combinations, particularly pointed out in the appended claims.

To achieve the objects and in accordance with the purpose of the invention, as embodied and broadly described herein, the present invention provides a polypropylene resin composition useful as an adhesive, in particular a polypropylene resin composition useful as an adhesive, particularly for bonding a polypropylene resin layer and an EVOH layer or a polyamide layer comprising (A) from about 55 wt. % to about

2

99wt. % of a modified polypropylene resin graft-modified with a compound selected from the group consisting of a radical polymerizable polar unsaturated compound and a mixture of the modified polypropylene resin graft-modified with a radical polymerizable polar unsaturated compound with an unmodified polypropylene resin, and (B) from about 1 wt. % to about 45 wt. % of an ethylene/propylene copolymer rubber having an ethylene content is from about 10 wt. % to about 45 wt. %.

## DESCRIPTION OF THE PREFERRED EMBODIMENTS

Reference will now be made in detail to the present preferred embodiments of the invention.

Exemplary suitable modified polypropylene resins for use in the present invention include those prepared by graft-modifying a crystalline polypropylene resin such as a homopolymer of propylene or a copolymer of propylene and other $\alpha$ -olefins with a radical polymerizable polar unsaturated compound such as acrylic acid, maleic acid, maleic anhydride, itaconic acid, itaconic anhydride, citraconic acid, and citraconic anhydride. Modified polypropylene resins prepared by the process described in Japanese Patent Publication No. 43045/1984 are also suitable for use in the invention.

Preferably, the grafted radical polymerizable polar unsaturated compound is present in the polypropylene resin composition of the invention in an amount of from about 0.01 wt. % to about 2.0 wt. %, particularly from about 0.1 wt. % to about 1.0 wt. % (graft content), based on the combined weight of the modified polypropylene resin graft-modified with a radical polymerizable polar unsaturated compound or a mixture of the same with an unmodified polypropylene resin and an ethylene/propylene copolymer rubber. If the graft content is less than about 0.01 wt. %, or greater than about 2 wt. %, the bonding strength between the polypropylene resinlayer and the EVOH layer or the polyamide resin layer decreases. Further, if the graft content exceeds about 2 wt. %, the resulting composition is liable to be colored, and the cost of production increases. When cost of production is taken into consideration, the modified polypropylene resin is preferably prepared in such a way that a modified polypropylene having a high radical polymerizable polar unsaturated compound content, i.e. high graft ratio, is first prepared by the process set forth above. The modified polypropylene is then mixed with an unmodified polypropylene resin to reach the desired graft content. Therefore, the mixing ratio of the modified polypropylene resin to the unmodified polypropylene resin will be determined by the graft ratio of the modified polypropylene resin and the desired graft content of the polypropylene resin composition for anadhesive. Although the crystalline polypropylene resin used as the raw material for the modified polypropylene resin having a high graft ratio and the polypropylene resin subsequently mixed therewith may be the same or different, it is preferable that the raw material for the modified polypropylene high in graft ratio is a homopolymer of propylene. It is preferable that the polypropylene resin subsequently mixed therewith is a propylene copolymer containing not greater than about 10 wt. % ethylene, more preferably no greater than about 8 wt. % ethylene.

The ethylene/propylene copolymer rubber employed in the present invention has an ethylene content of from about to about 45 wt. %, preferably from about 20 to about 10 wt. %. If the ethylene content is less than about 10 40 wt. %, the properties of the ethylene/propylene copolymer rubber are poor, and the handling thereof is difficult. If the ethylene content exceeds about 45 wt. %, and if the composition obtained from such an ethylene/propylene copolymer rubber is recycled for reuse, the appearance of the product becomes poor.

The blending ratio of the modified polypropylene resin and the ethylene/propylene copolymer rubber is such that the modified polypropylene resin or a mixture of the same with an unmodified polypropylene resin is present in the composition of the invention in an amount of from about 99 to about 55 wt. %, preferably from about 97 to about 60 wt. %, and the ethylene/propylene copolymer rubber is present in an amount of from about 1 to about wt. %, preferably from about 3 to about 40 wt. %. If the amount of the ethylene/propylene copolymer rubber is less than about 1 wt. %, the bonding strength between the resulting composition and the EVOH or the polyamide resin is low. If the amount of the ethylene/propylene copolymer rubber exceeds about 45 wt. %, the bonding strength between the resulting composition and the polypropylene resin is low.

Exemplary suitable additives for use in the composition of the invention include antioxidants, lubricants, heat resistant stabilizers, ultraviolet absorbers, hydrogen chloride catching agents, inorganic fillers, organic fillers, inorganic pigments, organic pigments, nucleating agents, and antistatic agents. The additives should be added to polypropylene resins in amounts that will not adversely effect the properties of the composition of the present invention.

The present resin composition is generally obtained by premixing its components by a Henschel mixer

3

or the like, and then melting and kneading the components by a uniaxial extruder, a biaxial extruder or the like to form pellets.

The present invention provides a resin composition that exhibits excellent adhesion properties between a polypropylene resin layer and an EVOH layer or a polyamide resin layer. When reused by recycling, the product maintains good appearance which is economical.

The invention will be further clarified by the following examples, which are intended to be purely exemplary of the invention.

EXAMPLES

In the following Examples, the peel strength was determined in accordance with JIS K-6854 (T-type peeling test), and the melt flow index (MI) was determined in accordance with ASTM D-1238.

Examples 1 to 7 and Comparative Examples 1 to 4

350 g of crystalline polypropylene resin (propylene homopolymer having an MI = 8 g/10 min) and 3500 ml of chlorobenzene were charged into a 5 liters autoclave. The mixture was heated to 125°C with stirring, and then a solution of 35 g of dicumyl peroxide in 140 ml of chlorobenzene, and a solution of 50 g of maleic anhydride in 80 ml of acetone were charged into the autoclave over 4 hours. After completion of the charging, stirring was continued at 125°C for 3 hours to complete the reaction. The reaction was carried out under a nitrogen atmosphere.

After cooling, the slurry was washed with a large amount of acetone, then filtered, and dried to obtain maleic anhydride grafted polypropylene resin (GPP). The maleic anhydride graft ratio of the resin was 10.8 wt. % according to the IR measurement.

The GPP, crystalline ethylene/propylene random copolymer (PP) having an ethylene content of 4.5 wt. % and an MI = 1.5 g/10 min and the ethylene/propylene copolymer rubbers set forth in Table 1 were blended in the ratios set forth in Table 2. To 100 parts by weight of each of the resulting blends were added 0.25 parts by weight of tris(2,4-di-t-butylphenyl)phosphite, 0.3 parts by weight of pentaerythrityltetrakis [3-(3,5-di-t-butyl-4-hydroxy-phenyl)propionate], and 0.2 parts by weight of calcium stearate, and after mixing by a Henschel mixer, each mixture was pelletized at 230°C by an 40-mmø uniaxial extruder to obtain propylene resin compositions of the present invention.

The compositions were used to assess the adhesion (peel strength) and the appearance after recycle in accordance with the following methods. The results are set forth in Table 2.

Preparation of samples for the measurement of adhesion (peel strength)

Using, for an adhesive layer, each of the resin compositions obtained above, for a polypropylene layer, each pelletized composition obtained by omitting GPP from the above resin compositions, and for an EVOH layer, "EVAL ® -F"resin (manufactured by Kurare Co., Ltd.), each laminated sheet that was made up of three resins and five layers, i.e. a polypropylene layer/an adhesive layer/an EVOH layer/an adhesive layer/a polypropylene layer, was obtained by co-extrusion using a feed block die. The feeding of the resins to the feed block die was carried out in such a manner that a 65-mm extruder was used for the polypropylene layer, a 30-mm extruder was used for the adhesive layer resin composition, and a 30-mm extruder was used for the EVOH layer. The thickness of the layers were 0.45 mm/0.04 mm/0.02 mm/0.04 mm/0.45 mm. The extrusion temperature of the polypropylene was 240 to 250 °C, those of the adhesive layer resin composition and the EVOH were 235 °C, that of the feed block was 235°C, and that of the die was 240 °C.

Preparation of samples for the assessment of appearance after recycle

Each of the sheets made up of three resins and five layers used in the above assessment of adhesion was ground, repelletized five times at 230°C by a 40-mm uniaxial extruder, and was used in the same way as that of the above polypropylene layer. That is, laminated sheets made up of three resins and five layers,

4

i.e., a recycled resin layer/an adhesive layer/an EVOH layer/an adhesive layer/a recycled resin layer were formed.

The laminated sheets used in the above assessment of adhesion and the laminated sheets wherein the recycled resins were used were formed into cups having a diameter of 10 cm and a depth of 5 cm by the air-pressure forming process, and the appearance of the barrel section of each cup was assessed in accordance with the following criteria.

Criteria

◎ : visual appearance defects due to blobbing, fish eye, uneven extension, etc. were not observed at all. O : visual appearance defects due to blobbing, fish eye, uneven extension, etc. were observed slightly. Δ : visual appearance defects due to blobbing, fish eye, uneven extension, etc. were observed considerably. x : visual appearance defects due to blobbing, fish eye, uneven extension, etc. were observed conspicuously.

Table 1.

| Ethylene/propylene copolymer rubbers | |
| --- | --- |
| Code | Ethylene content (wt. %) |
| EPR-A | 25 |
| EPR-B | 28 |
| EPR-C | 77 |

Table 2

| | Unit | Ex.1 | Ex.2 | Ex.3 | Ex.4 | Ex.5 | Ex.6 | Ex.7 | Com. Ex.1 | Com. Ex.2 | Com. Ex.3 | Com. Ex.4 |
| --- | --- | --- | --- | --- | --- | --- | --- | --- | --- | --- | --- | --- |
| PP | Wt.% | 92 | 77 | 67 | 77 | 57 | 79 | 72 | 92 | 72 | 96.5 | 47 |
| GPP | | 3 | 3 | 3 | 3 | 3 | 1 | 8 | 3 | 3 | 3 | 3 |
| EPR-A | | 5 | 20 | 30 | | 40 | 20 | 20 | | | 0.5 | 50 |
| EPR-B | | | | | 20 | | | | | | | |
| EPR-C | | | | | | | | | 5 | 20 | | |
| Adhesion | kg/cm | 1.5 | 1.8 | 1.9 | 1.6 | 1.7 | 1.1 | 1.6 | 1.6 | 1.8 | 0.42 | 0.8 |
| Appearance after recycle | - | ◎ | ◎ | O | ◎ | O | ◎ | ◎ | Δ | x | ◎ | Δ |

Example 8

Example 1 was repeated, except that instead of EVOH (Eval ®-F) used in Example 1, "UBE nylon 1011" (a trade name and manufactured by Ube Industries, Ltd.), was employed, the extrusion temperature of the nylon was 250°C , that of the feed block was 250°C , and that of the die was 245°C .

The peel strength was 3.0 kg/cm and the appearance after recycle was ◎ .

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

**Claims**

1. A polypropylene resin composition useful as an adhesive comprising (A) from about 55 wt.% to about 99 wt. % of a resin selected from the group consisting of a modified polypropylene resin graft-modified with a radical polymerizable polar unsaturated compound and a mixture of said modified polypropylene resin graft-modified with a radical polymerizable polar unsaturated compound with an unmodified polypropylene resin, and (B) from about 1 wt. % to about 45 wt. % of an ethylene/propylene copolymer rubber having an ethylene content of from about wt. % to about 45 wt. %.

2. Use of the polypropylene resin composition of claim 1 as an adhesive for bonding a polypropylene resin layer and an ethylene/vinyl alcohol copolymer layer.

3. Use of the polypropylene resin composition of claim 1 as an adhesive for bonding a polypropylene resin layer and a polyamide resin layer.

4. The polypropylene resin composition of claim 1, wherein the polypropylene resin is selected from the group consisting of homopolymers of propylene and copolymers of propylene and other $\alpha$ -olefins and said radical polymerizable polar unsaturated compound is selected from the group consisting of acrylic acid, maleic acid, maleic anhydride, itaconic acid, itaconic anhydride, citraconic acid, and citraconic anhydride.

5. The polypropylene resin composition of claim 4, wherein said radical polymerizable polar unsaturated compound is maleic anhydride.

6. The polypropyrene resin composition of claim 1, wherein said radical polymerizable polar unsaturated compound is present in an amount of from about 0.01 wt. %. to about 2.0 wt. % based on the combined weight of said graft-modified polypropylene resin and said ethylene/propylene copolymer rubber.

7. The polypropylene resin composition of claim 1, wherein said resin selected from the group consisting of a modified polypropylene resin graft-modified with a radical polymerizable polar unsaturated compound and a mixture of the modified polypropylehe resin graft-modified with a radical polymerizable polar unsaturated compound with an unmodified polypropylene is present in an amount of about 60 wt. % to about 97 wt. %, and said ethylene/propylene copolymer rubber is present in an amount of from about 3 wt. % to about 40 wt. % and has an ethylene content of from about 20 wt. % to about 40 wt. %.

8. The polypropylene resin composition of claim 1, wherein said polypropylene resin is a homopolymer of propylene and said unmodified polypropylene resin is a propylene copolymer containing not greater than about 10 wt. % ethylene.

9. The polypropylene resin composition of claim 1 further comprising at least one additive.

10. The polypropylene resin composition of claim 9 wherein said at least one additive is selected from the group consisting of antioxidants, lubricants, heat resistant stabilizers, ultraviolet absorbers, hydrogen chloride catching agents, inorganic fillers, organic fillers, inorganic pigments, organic pigments, nucleating agents and antistatic agents.